# EUROPÄISCHE PATENTSCHRIFT

(11) **EP 0 716 624 B1**
(45) Veröffentlichungstag und Bekanntmachung des Hinweises auf die Patenterteilung: **18.03.1998**
(21) Anmeldenummer: 94927505.1
(22) Anmeldetag: 26.08.1994
(51) Int. Cl.: B01D 39/20, C02F 1/00, B01J 47/00, E03B 7/07

(54) **FILTERANORDNUNG**
FILTERING DEVICE
DISPOSITIF DE FILTRAGE

(30) Priorität: 30.08.1993 DE 9312898 U
(43) Veröffentlichungstag der Anmeldung: 19.06.1996
(73) Patentinhaber: Brehmer, Uwe, 65205 Wiesbaden (DE)
(72) Erfinder: Mitschke, Hans-Peter, 72768 Reutlingen (DE)
(74) Vertreter: Schuster, Gregor
(86) Internationale Anmeldenummer: EP9402835
(87) Internationale Veröffentlichungsnummer: WO9506507

(56) Entgegenhaltungen:
- EP-A- 0 149 187
- DE-A- 3 037 582
- PATENT ABSTRACTS OF JAPAN vol. 8, no. 93 (C-220) 27. April 1984 & JP,A,59 010 384 (KOGANEI KOGYO K.K.) 19. Januar 1984

## Beschreibung

Die Erfindung betrifft eine Filteranordnung, insbesondere für Trinkwasser, mit einem Filtereinsatz nach der Gattung des Hauptanspruchs.

Bei einer bekannten gattungsgemäßen Filteranordnung (EP-A-0 149 187) wird zusätzlich in der Filteranordnung Silber in Form von Salzen angewendet, um dadurch eine Sterilisation des zu filternden Wassers zu erreichen. Ein solches Silbersalz oder auch die metallischen Anteile aus reinem Silber eines solchen Salzes können mit dem zu filternden Medium, wie beispielsweise Trinkwasser, aus dem Filtereinsatz herausgeschwemmt werden und als Schadstoffe in den menschlichen Körper gelangen, in welchem sie als Gift wirken. Hierdurch wird das Gegenteil dessen erreicht, was eigentlich ein solcher Filter erzielen soll. Die Gefahr des Herausschwemmens derartiger metallischer Salze ist besonders bei höheren Temperaturen des Wassers, insbesondere beim Regenerieren des Filtereinsatzes gegeben.

Der Erfindung liegt daher die Aufgabe zugrunde, einen Filter der gattungsgemäßen Art zu entwickeln, der zwar die hohe Reinigungsqualität von Filtern mit einem Gestrick, Gewebe oder Gewirk aus Kohlenstoffasern aufweisen, einschließlich einem metallischen Sterilisationseffekt zur Verhinderung der Aufkeimung des Filters, ohne die genannten Nachteile.

Die erfindungsgemäße Filteranordnung mit den kennzeichnenden Merkmalen des Hauptanspruchs hat demgegenüber den Vorteil, daß ein Ausschwemmen des die Keimbildung verhindernden Silbers praktisch nicht möglich ist, so daß einerseits die Filterqualität unverändert erhalten bleibt und andererseits keine Gefahr einer Kontaminierung von Personen durch Silbersalze oder Silbermoleküle stattfinden kann, die dieses gefilterte Wasser trinken.

Natürlich kann der Filtereinsatz in den verschiedensten Formen hergestellt werden. Zur Erzielung einer großen Oberfläche kann er nach einer vorteilhaften Ausgestaltung der Erfindung eine im wesentlichen zylindrische Form aufweisen. Außerdem kann nach weiterer Ausgestaltung der Erfindung bei dem Filter zusätzlich ein Ionenaustauscher vorgesehen sein, um auch Nitrate ausfiltern zu können.

Der erfindungsgemäße Filter kann auch als Blutfilter oder zur Filterung anderer Flüssigkeiten eingesetzt werden. Ein weiteres Einsatzgebiet ist die Filterung von Raumluft odrt Abluft. Dort kann eine erfindungsgemäße Filteranordnung die bislang bekannten Filter mit einem Einsatz aus einem aktivkohlegetränkten Schaumstoff ersetzen. Im Gegensatz zu den Schaumstoffeinsätzen ist der Filtereinsatz der hier beschriebenen Anordnung regenerierbar und bildet somit keinen Problemmüll bei der Entsorgung.

Nachfolgend wird anhand der Zeichnung ein Ausführungsbeispiel einer erfindungsgemäßen Filteranordnung näher erläutert.

Im einzelnen zeigen:
Fig. 1 eine Seitenansicht eines Gehäuses für einen Filtereinsatz;
Fig. 2 eine schematische Ansicht eines Filtereinsatzes.

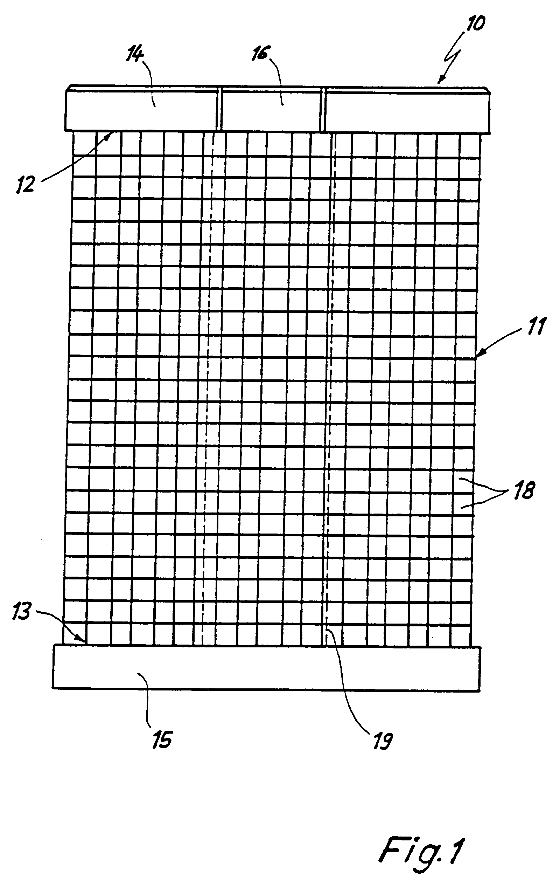

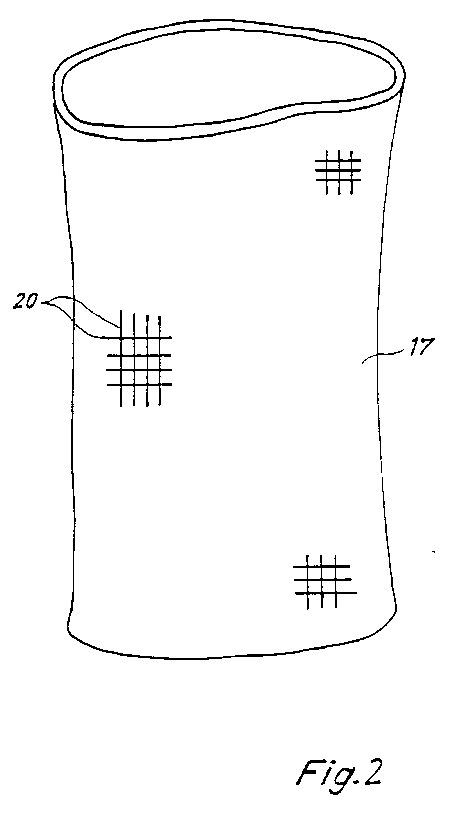

In Fig. 1 ist ein zylindrisches Gehäuse 10 dargestellt, dessen Zylindermantel aus einer gitterförmigen Edelstahlhülse 11 gebildet wird. Edelstahl ist der Verwendung von Kunststoff vorzuziehen, da sich in Kunststoffen leicht Legionellen ansiedeln können. An den Stirnseiten 12 und 13 wird die Hülse 11 von zwei Edelstahlscheiben 14 und 15 begrenzt. Die obere Scheibe 14 weist eine zentrale Öffnung 16 auf, an der ein Ableitungshahn oder ein Ableitungsrohr für das Filtrat angeschlossen werden kann. Das zu filternde Medium gelangt durch die Gitteröffnungen 18 in der Hülse 11 zu einem im Gehäuse 10 befindlichen und in Fig. 2 näher dargestellten Filtereinsatz 17 und verläßt anschließend das Gehäuse 10 durch die Öffnung 16 der Edelstahlscheibe 14 in gereinigtem Zustand. Zur Halterung des Filtereinsatzes 17 und zur Sammlung des gereinigten Mediums kann anschließend an die Durchgangsöffnung 16 der Scheibe 14 ein bis zur unteren Scheibe 15 durchgehendes Rohr 19 mit einer Siebwandung vorgesehen sein.

Der in Fig. 2 dargestellte Filtereinsatz 17 weist eine im wesentlichen zylindrische Form aus und ist damit der Form des Gehäuses 10 angepaßt. Der Einsatz 17 ist im dargestellten Beispiel aus einem Gewebe aus aktivierten Kohlenstoffasern 20 gebildet. Noch bessere Eigenschaften lassen sich mit Gestricken oder Gewirken aus aktivierten Kohlenstoffasern 20 erzielen, da diese eine noch größere Wirkoberfläche aufweisen. Diese Gestricke und Gewirke können auch spiralförmig übereinander geschichtet werden, um eine noch größere Dichte zu erhalten. Auch die Herstellung eines Vlieses aus aktivierten Kohlenstoffasern ist möglich. Dabei kann die Faserstärke sowie die Dichte des Gestricks, Gewebes, Gewirkes oder Vlieses je nach zu reinigendem Medium und je nach Anforderungen an den Reinheitsgrad des Filtrats variiert werden. Auch die Formen des Filtereinsatzes 17 sind beliebig gestaltbar. Den Anwendungsmöglichkeiten des erfindungsgemäßen Filtrats sind somit kaum Grenzen gesetzt. Außer den Silberfäden können auch andere Zusatzstoffe vorgesehen sein sowie das Vorhandensein von mehreren Filterkammern.

## Patentansprüche

1. Filteranordnung, insbesondere für Trinkwasser, mit einem Filtereinsatz, der aus einer oder mehreren aktivierten Kohlenstoffasern (20) gebildet ist, welche zu einem Gestrick, Gewebe oder Gewirk ausgebildet sind, dadurch gekennzeichnet, daß in diesen Filtereinsatz (17) zusätzlich Silberfäden eingestrickt, eingewoben oder eingewirkt sind.

2. Filteranordnung nach Anspruch 1, dadurch gekennzeichnet, daß der Filtereinsatz (17) eine im wesentlichen zylindrische Form aufweist.

3. Filteranordnung nach einem der Ansprüche 1 oder 2, dadurch gekennzeichnet, daß im Filter zusätzlich ein Ionenaustauscher vorgesehen ist.

## Claims

1. Filter device, in particular for drinking water, with a filter insert formed from one or more activated carbon fibers (20) fashioned into a knitted, webbed, or woven structure, characterized in that additional silver threads are knitted, woven or worked into this filter insert (17).

2. Filter device of claim 1, characterized in that the filter insert (17) has a substantially cylindrical shape.

3. Filter device of any of the claims 1 or 2, characterized in that an ion exchanger is also provided for in the filter.

## Revendications

1. Dispositif de filtrage, notamment d'eau potable, avec une cartouche filtrante faite d'une ou plusieurs fibres de carbone activées (20), lesquelles sont assemblées en forme de tricotage, tissu, ou tissu à mailles, caractérisé par le fait que des fils d'argent supplémentaires sont entrelacés, tissés ou tricotés dans cette cartouche filtrante (17).

2. Dispositif de filtrage selon la revendication 1, caractérisé par le fait que la cartouche filtrante (17) a une forme globalement cylindrique.

3. Dispositif de filtrage selon la revendication 1 ou 2, caractérisé par le fait qu'un échangeur d'ions supplémentaire est prévu dans le filtre.
